# EUROPÄISCHE PATENTANMELDUNG

(11) **EP 2 071 496 A1**
(43) Veröffentlichungstag der Anmeldung: **17.06.2009**
(21) Anmeldenummer: 07024168.2
(22) Anmeldetag: 13.12.2007
(51) Int. Cl.: G06K 19/07, G06K 19/077, B65D 65/00

(54) **Verfahren zur Herstellung einer flexiblen Verpackung mit RFID Transponder**

(71) Anmelder: Mondi AG, 1032 Wien (AT)
(72) Erfinder: Anselmi, Christian, Dipl.-Ing., 1030 Wien (AT); Zoister, Stefan, Dipl.Ing. (FH), 4320 Perg (AT)
(74) Vertreter: Landgraf, Elvira

(57) **Zusammenfassung**

Die Erfindung betrifft ein Verfahren zur Herstellung einer flexiblen Verpackung, die eine Vorrichtung zum Senden, Empfangen und Speichern von Informationen zur Nachverfolgung und Identifikation der Verpackung aufweist, **dadurch gekennzeichnet, dass** die Vorrichtung zum Senden, Empfangen und Speichern von Informationen inline aufgebracht wird.

## Beschreibung

Die Erfindung betrifft eine flexible Verpackung, die ein Mittel zur Nachverfolgung und Identifikation der Verpackung aufweist, sowie ein Verfahren zur Herstellung der Verpackung.

Heute werden beim Einsatz von RFID-Technologie in Logistikketten RFID-Etiketten noch größtenteils von den Kunden der Verpackungsindustrie selbst und oft meist manuell auf flexible Verpackungsmaterialien aufgebracht.

Vereinzelt kommen einfache offline Systeme zur Applikation von Barcode Etiketten zum Einsatz. Andererseits gibt es RFID-Systeme die sich integrieren und automatisieren lassen, jedoch zu langsam sind und sich nicht für den Einsatz unter Bedingungen wie sie in der Verpackungsindustrie herrschen eignen, da sie nicht ausreichend gegen Staub geschützt sind und sich nicht in bestehende Verpackungsherstellungsmaschinen integrieren lassen.

Ferner kann durch die nachträgliche Aufbringung der RFID-Etiketten keine sichere identifizierung erfolgen, Manipulationen sind kaum erkennbar oder beweisbar.

Aufgabe der Erfindung war es, ein Verfahren zur Integration von RFID-Transpondem in flexible Verpackungen bereitzustellen, das in den Produktionsprozess integriert werden kann und eine sichere und eindeutige Erkennung und Identifizierung der Verpackung erlaubt.

Gegenstand der Erfindung ist daher ein Verfahren zur Herstellung einer flexiblen Verpackung, die eine Vorrichtung zum Senden, Empfangen und Speichern von Informationen zur Nachverfolgung und Identifikation der Verpackung aufweist, **dadurch gekennzeichnet dass,** die Vorrichtung zum Senden, Empfangen und Speichern von Informationen inline direkt oder als Streifen oder Patch auf die Verpackung oder als Inlay zwischen zwei Schichten einer Verpackung aufgebracht wird.

Als Verpackungsmaterial kommen dabei flexible Verpackungsmaterialien aus Kunststoffen, wie beispielsweise aus Polyester, wie orientiertes PET oder amorphes PET, Polyolefine wie Polypropylen, Cast-PP, geblasenen, gereckte, biaxial gereckte PP-Folien, oder Polyethylen, Polystyrol, Polycarbonat, Zellglas, Polyamid, Polyvinylchlorid PMMA Polyurethan. Epoxiden, Polybutadien oder deren Copolymere. Es können aber coextrudierte oder laminierte Kunststoffverbundfolien oder Verbunde verwendet werden.

Ferner ist es möglich beschichtete Folien, biologisch abbaubare Folien, Metallfolien (wie Aluminiumfolien) und dergleichen zu verwenden.
Als Verpackungsmaterialien kommen auch gefüllte oder beschichtete Polymere in Frage.

Als Füllstoffe können beispielsweise Siliziumoxide, Aluminiumoxide und dergleichen in Frage kommen.

Als Beschichtungen kommen vorwiegend metallische Beschichtungen, beispielsweise Aluminium, Chrom, Kupfer, Titan und dergleichen in Frage.

Unter einer Vorrichtung zum Senden, Empfangen und Speichern von Informationen werden hier Transponder, insbesondere Tags, Etiketten oder Inlays verstanden.

Es kann UHF oder HF Technologie zum Einsatz kommen.

Der Transponder besteht üblichenrweise aus einem Trägersubstrat, vorzugsweise einer Kunststofffolie, beispielsweise einer Polyesterfolie, einer Polypropylenfolie oder Papier oder dergleichen.

Auf dieses Trägersubstrat sind metallische Beschichtungen, beispielsweise aus Cu oder Al aufgebracht, die die Antenne bilden. Ferner kann die Antenne auch durch Drucken leitfähiger Farben oder Lacke oder leitfähiger Kunststoffe oder Polymere hergestellt werden.

In weiterer Folge werden gedruckte Schaltungen (IC's) aufgebracht. Dabei werden in der Regel organische polymere Verbindungen (beispielsweise Polyaninile, substituierte Polythiophene und dergleichen) verwendet um die integrierte Schaltung selbst zu drucken.
Das Drucken der Schaltungen kann dabei mittels eines bekannten Druckverfahrens, beispielweise im Tiefdruck, Siebdruck, Flexodruck und/oder Offsetdruck erfolgen.

Die integrierte Schaltung kann relevante Daten, wie Herkunft und Art des Produkts, Herstellungsdatum, Verpackungsdatum und/oder weitere produkttechnische und vom Kunden oder Verbraucher gewünschte Daten speichern.

Dieses Inlay, bestehend aus Trägersubstrat, Antenne und integrierter Schaltung kann mit Selbstklebe- und eventuell anderen Beschichtungen versehen in ein selbstklebendes Etikett konvertiert werden oder auch mit bekannten Schutzschichten versehen werden, um das Inlay gegen mechanische, elektromagnetische oder auch andere physikalische oder chemische Umwelteinflüsse zu schützen und die erforderliche Stabilität zu gewährleisten.

Zur Aufbringung des Transponders wird ein gegebenenfalls beschriebener RFID-Transponder von einer Rolle oder in vereinzelter Form bereitgestellt und überprüft.

Defekte Transponder werden im Anschluss daran ausgeschieden. Anschließend wird der Tag, falls er noch nicht mit den gewünschten Informationen versehen ist, beschrieben und wiederum überprüft, wobei defekte Tags wieder ausgeschieden werden.

Die Aufbringung des Transponders erfolgt register- und passergenau durch Kaschieren (lösungsmittelhaltiges Kaschieren, lösungsmittelfreies Kaschieren, Nass- oder UV-Kaschieren), Aufkleben, Heiß- oder Kaltprägeverfahren, Heiß- oder Kalt-Kalandieren und dergleichen.

Die register und passergenaue Aufbringung erfolgt vorzugsweise durch bekannte Insetter-Verfahren oder durch ein Step and Repeat-Verfahren.

Der Transponder bzw. die Strukturen können auf die Oberfläche des Verpackungsmaterials oder zwischen zwei Schichten eines mehrlagigen Verpackungsmaterials aufgebracht sein, wobei die Strukturen in einer Innen- oder Außenlage aufgebracht sein können.

Die elektrischen Schaltstrukturen können dabei in einer Folienlage aufgebracht sein, aus dem Formschluss zwischen elektrischen Schaltstrukturen und Antennenstruktur ergibt sich eine elektrisch leitfähige Verbindung.

Bei Aufbringung der elektrischen Schaltstrukturen und der Antennenstruktur auf verschiedene Lagen werden die beiden über Verbindungskontakte leitfähig miteinander verbunden. Diese Verbindungskontakte können auch später, nach der Aufbringung in einem weiteren Verfahrensschritt aktiviert werden. Dabei kann die Verbindung durch mechanische Kontaktierung, beispielsweise durch Druck oder thermische Kontaktierung erfolgen

In einer weiteren Ausführungsform können die Strukturen, die die Antenne bilden, direkt an einer definierten Stelle des Verpackungsmaterials aufgebracht werden. Ebenso kann die integrierte Schaltung und/oder die Antennenstruktur direkt auf das Verpackungsmaterial aufgebracht sein oder in einem weiteren Schritt register- und passergenau aufgebracht werden.

Die direkte Aufbringung erfolgt vorzugsweise durch Druckverfahren, beispielsweise Flexo-, Sieb-, Tief- oder Digitaldruckverfahren.

Durch die direkte Aufbringung des RFID-Transponders während der Herstellung des Verpackungsmaterials ist eine eindeutige Identifikation und Nachverfolgbarkeit der Verpackung möglich.

Die erfindungsgemäß mit einem Transponder versehenen Verpackungsmaterialien können beispielsweise zu Beuteln, Säcken, Taschen oder Sachets konfektioniert werden.

## Patentansprüche

1. Verfahren zur Herstellung von Folienmaterial, das eine Vorrichtung zum Senden, Empfangen und Speichern von Informationen zur Nachverfolgung und Identifikation des Folienmaterials aufweist, **dadurch gekennzeichnet, dass** die Vorrichtung zum Senden, Empfangen und Speichern inline auf das Verpackungsmaterial aufgebracht wird.

2. Verfahren nach Anspruch 1, **dadurch gekennzeichnet, dass** die Vorrichtung zum Senden, Empfangen und Speichern von Informationen durch einen Transponder mit einer Antennenstruktur und einer integrierten Schaltung gebildet wird.

3. Verfahren nach einem der Ansprüche 1 oder 2, **dadurch gekennzeichnet, dass** UHF und HF Technologie zum Einsatz kommen kann.

4. Verfahren nach einem der Ansprüche 1 bis 3, **dadurch gekennzeichnet, dass** elektronische Schaltstrukturen durch Silizium Halbleiter oder gedruckte partiell leitfähige Schichten wie Polyaniline oder Polythiophene hergestellt werden.

5. Verfahren nach einem der Ansprüche 1 bis 4, **dadurch gekennzeichnet, dass** die elektrischen Schaltstrukturen direkt auf das Verpackungsmaterial oder indirekt auf die auf das Verpackungsmaterial aufzubringenden Inlays, Etiketten oder Folienstreifen aufgebracht werden.

6. Verfahren nach einem der Ansprüche 1 bis 5, **dadurch gekennzeichnet, dass** die elektronischen Schaltstrukturen mittels eines Tiefdruck-, Siebdruck- Flexodruck- und/oder Offsetdruckverfahrens hergestellt werden.

7. Verfahren nach einem der Ansprüche 1 bis 6, **dadurch gekennzeichnet, dass** die Antenne durch Drucken elektrisch leitfähiger Druckfarben oder Polymere oder durch partielles Metallisieren hergestellt wird.

8. Verfahren nach einem der Ansprüche 1 bis 7, **dadurch gekennzeichnet, dass** die Antennenstrukturen direkt auf das Verpackungsmaterial oder indirekt auf die auf das Verpackungsmaterial aufzubringenden Inlays, Etiketten oder Folienstreifen aufgebracht werden.

9. Verfahren nach einem der Ansprüche 1 bis 8, **dadurch gekennzeichnet, dass** die Antennestrukturen mittels eines Tiefdruck-, Siebdruck-Flexodruck und/oder Offsetdruckverfahrens hergestellt werden.

10. Verfahren nach einem der Ansprüche 1 bis 9, **dadurch gekennzeichnet, dass** die Inlays oder Etiketten mittels eines Aufspendegerätes in das flexible Folienmaterial integriert werden können, durch eine haft- bzw. drucksensible Beschichtung, durch Kleben oder Prägen.

11. Verfahren nach einem der Ansprüche 1 bis 10, **dadurch gekennzeichnet, dass** die Folienstreifen mit den elektrischen Schalt- und/oder Antennenstrukturen durch Kaschieren oder Kalandrieren integriert werden können.

12. Verfahren nach einem der Ansprüche 10 bis 11, **dadurch gekennzeichnet, dass** die Einbringung nach Anspruch 10 und Anspruch 11 kombiniert werden kann.

13. Verfahren nach einem der Ansprüche 10 bis 11, **dadurch gekennzeichnet, dass** die Einbringung nach Anspruch 10 und oder 11 hoch präzise im Register zum vorbedruckten Folienmaterial mittels eines Insetterverfahrens oder als Step und Repeat-Verfahren erfolgt.

14. Verfahren nach Anspruch 1 bis 13, **dadurch gekennzeichnet, dass** die beschriebenen Prozessschritte inline oder in einzelnen Arbeitschritten durchgeführt werden.

15. Verfahren nach Anspruch 1 bis 14, **dadurch gekennzeichnet, dass** das Folienmaterial eine ein- oder mehrlagige Folie oder ein Laminat ist.

16. Verfahren nach einem der Ansprüche 1 bis 15, **dadurch gekennzeichnet, dass** das Folienmaterial aus Kunststoff, Papier oder Metall besteht.

17. Verfahren nach Anspruch 1 bis 16, **dadurch gekennzeichnet, dass** das hergestellte Folienmaterial die elektrischen bzw. Antennenstrukturen in einer Innen- oder Außenlage angebracht sein kann.

18. Verfahren nach einem der Ansprüche 1 bis 17, **dadurch gekennzeichnet, dass** die elektrischen Schaltstrukturen und die Antennenstrukturen in einer Folienlage aufgebracht sind und sich aus dem Formschluss eine elektrisch leitfähige Verbindung ergibt.

19. Verfahren nach einem der Ansprüche 1 bis 18, **dadurch gekennzeichnet, dass** die elektrischen - und Antennenstrukturen auf verschiedenen Lagen hergestellt sein werden und beide über Verbindungskontakte leitfähig miteinander verbunden sind.

20. Verfahren nach einem der Ansprüche 1 bis 19, **dadurch gekennzeichnet, dass** die in Anspruch 18 beschriebenen Verbindungskontakte nachträglich aktiviert werden können.

21. Verfahren nach Anspruch 1 bis 20, **dadurch gekennzeichnet, dass** die in Anspruch 19 beschriebenen Verbindungskontakte durch mechanische oder durch thermische Kontaktierung hergestellt werden.

22. Verwendung des nach einem der Ansprüche 1- 21 hergestellten Folienmaterials als flexible Verpackung, thermoformbares Folienmaterial, technische Folien oder In-mold Folien.
